# EUROPEAN PATENT APPLICATION

(11) **EP 4 002 788 A1**
(43) Date of publication of application: **25.05.2022**
(21) Application number: 20207603.0
(22) Date of filing: 13.11.2020
(51) Int. Cl.: H04L 29/06, H04L 9/08, H04W 12/04

(54) **A SYSTEM AND DEVICES FOR SECURE AND EFFICIENT PROVISIONING OF ELECTRONIC DEVICES**

(71) Applicant: Secure Thingz Limited, Trumpington, Cambridge CB2 9FF (GB)
(72) Inventor: OLDFIELD, Michael, Cambridge, CB1 9LD (GB); HOOLE, Tim, Cambridgeshire, CB22 6SU (GB); HILL, Mark, Suffolk, CO10 8BX (GB)
(74) Representative: Patentship Patentanwaltsgesellschaft mbH

(57) **Abstract**

A provisioning security device (140), for instance a Hardware Security Module, is disclosed, which is configured to be coupled to a provisioning apparatus (160). The provisioning apparatus (160) is electrically connectable with at least one electronic device (170) for provisioning the electronic device (170) in a provisioning session with provisioning data (150) using a serial communication protocol of the electronic device (170). The provisioning security device (140) comprises a processing circuitry (141) configured to generate a provisioning script for executing a portion of the provisioning session. The provisioning script defines a sequence of a plurality of commands of the serial communication protocol used by the electronic device (170) and comprises a portion of the provisioning data (150). Moreover, the provisioning security device (140) comprises a communication interface (143) configured to transmit the provisioning script to the provisioning apparatus (160). Furthermore, a correspondingly configured provisioning apparatus (160) is disclosed.

## Description

### TECHNICAL FIELD

The invention relates to the secure production and provisioning of electronic devices. More specifically, the invention relates to a system and devices for the secure and efficient provisioning of electronic devices.

### BACKGROUND OF THE INVENTION

The production and assembly of state-of-the-art electronic consumer equipment, such as smart phones, tablet computers as well as other types of loT devices, often happens in a distributed fashion in that the various electronic components or devices, including the electronic chips or microprocessors of the electronic consumer equipment are manufactured, provisioned or personalized and finally assembled at different locations and by different parties. For instance, an electronic chip or microprocessor for an electronic consumer equipment may be originally manufactured by a chip manufacturer and provisioned by another party with a suitable firmware, before being assembled into the final end product by the manufacturer of the electronic consumer equipment, e.g. an OEM.

For such distributed processing chains of electronic equipment there is a need for a system and devices allowing for a secure and efficient provisioning of electronic components or devices, such as chips or microprocessors of the electronic equipment.

### SUMMARY OF THE INVENTION

It is therefore an object of the invention to provide devices and a system for a secure and efficient provisioning of electronic devices, such as chips or microprocessors for electronic equipment.

The foregoing and other objects are achieved by the subject matter of the independent claims. Further implementation forms are apparent from the dependent claims, the description and the figures.

According to a first aspect a provisioning security device for a provisioning system is provided. The provisioning security device, which in an embodiment may be implemented as a Hardware Security Module (HSM), is configured to be coupled to a provisioning apparatus of the provisioning system. The provisioning apparatus is electrically connectable with at least one electronic device for provisioning the electronic device in a provisioning session with provisioning data using a serial communication protocol of the electronic device, i.e. a serial communication protocol used by the electronic device.

The electronic devices to be provisioned may comprise chips, microprocessors or other programmable electronic components, such as Flash memories, electrically erasable programmable read only memories (EEPROM), programmable logic devices (PLDs), field programmable gate arrays (FPGAs), and microcontrollers incorporating non-volatile memory elements. The provisioning data may comprise a program code, such as a firmware originally provided by a remote server, or other type of data, such as cryptographic keys. The provisioning data may be digitally signed. The provisioning data may comprise personalized provisioning data in that the provisioning data is only used to provision, i.e. personalize one respective electronic device, because it contains, for instance, a unique cryptographic key or electronic device identifier, such as an identification number.

The provisioning security device comprises a processing circuitry configured to generate a provisioning script for executing a portion of the provisioning session, wherein the provisioning script defines a sequence of a plurality of commands of the serial communication protocol used by the electronic device and comprises at least a portion of the provisioning data. In an embodiment, the plurality of commands may comprise a plurality of sub-commands, wherein the sequence of the plurality of sub-commands defines a more general command or routine of the provisioning session. Moreover, the provisioning security device comprises a communication interface configured to transmit the provisioning script to the provisioning apparatus.

In a further embodiment, the communication interface of the provisioning security device is further configured to receive from the provisioning apparatus one or more responses, such as one or more acknowledgement responses, generated by the electronic device in response to the sequential execution of the plurality of commands defined by the provisioning script.

In a further embodiment, the processing circuity of the provisioning security device is configured to generate ((based on the one or more responses generated by the electronic device) a further provisioning script for executing a further portion of the provisioning session, wherein the further provisioning script defines a further sequence of a plurality of commands of the serial communication protocol used by the electronic device and comprises a further portion of the provisioning data, wherein the communication interface is configured to transmit the further provisioning script to the provisioning apparatus. In an embodiment, the processing circuity of the provisioning security device may continue generating further provisioning scripts, until the provisioning session has been completed, i.e. all the portions of the provisioning data have been provided to the electronic device. After completing a provisioning session, the processing circuity of the provisioning security device may be configured to continue with provisioning the next electronic device or the next batch of electronic devices in the same way.

In a further embodiment, the processing circuitry of the provisioning security device is further configured to include metadata, i.e. control data into the provisioning script, wherein the metadata comprises data for enabling the provisioning apparatus to generate for each of the plurality of commands defined by the provisioning script a command data frame in compliance with the serial communication protocol of the electronic device.

In a further embodiment, the metadata comprises information defining an expected procedure of the interaction between the provisioning apparatus and the electronic device, as defined by the plurality of commands of the provisioning script, thereby allowing the provisioning apparatus itself to communicate with the electronic device without needing to know the details of, or have a state machine implementing, the communication protocol itself.

In a further embodiment, the metadata further comprises data for enabling the provisioning apparatus to interpret a serial status data frame received by the provisioning apparatus from the electronic device.

In a further embodiment, the metadata further comprises data for enabling the provisioning apparatus to parse a serial data frame received by the provisioning apparatus from the electronic device and to determine based on the parsed serial data frame a number and/or size of further serial data frames to be transmitted by the electronic device to the provisioning apparatus during the remaining portion of the provisioning session.

In a further embodiment, the metadata further comprises data enabling the provisioning apparatus to determine the completion of one or more of the plurality of commands defined by the provisioning script and to determine a type of data to be returned to the provisioning security device in response to the completion of the one or more of the plurality of commands defined by the provisioning script.

In a further embodiment, the communication interface of the security provisioning device is configured to communicate with the provisioning apparatus via a wired or a wireless connection. In an embodiment, the provisioning apparatus may be implemented as a personal computer and the provisioning security device, in particular HSM, may be implemented as a PC card inserted in the provisioning apparatus.

According to a second aspect a provisioning apparatus for a provisioning system is provided. The provisioning apparatus is configured to be electrically connected with at least one electronic device for provisioning the electronic device in a provisioning session with provisioning data using a serial communication protocol of the electronic device. The provisioning apparatus comprises a communication interface configured to receive a provisioning script for executing a portion of the provisioning session from a provisioning security device, wherein the provisioning script defines a sequence of a plurality of commands of the serial communication protocol used by the electronic device and comprises a portion of the provisioning data. Moreover, the provisioning apparatus comprises a processing circuitry configured to provision the electronic device with the portion of the provisioning data in accordance with the sequence of the plurality of commands of the serial communication protocol.

In a further embodiment, for provisioning the electronic device the processing circuitry of the provisioning apparatus is configured to extract the portion of the provisioning data from the provisioning script.

In a further embodiment, for provisioning the electronic device the processing circuitry is configured to generate (based on the provisioning script) the sequence of the plurality of commands of the serial communication protocol and the communication interface is configured to transmit sequentially, i.e. one by one the plurality of commands of the serial communication protocol to the electronic device for execution by the electronic device.

In a further embodiment, the communication interface is configured to transmit to the provisioning security device apparatus one or more response messages generated by the electronic device in response to the execution of the sequence of the plurality of commands defined by the provisioning script.

In a further embodiment, the plurality of commands comprises one or more write commands for writing the portion of the provisioning data into one or more portions of a memory of the electronic device.

In a further embodiment, the processing circuitry of the provisioning apparatus is configured to extract metadata, i.e. control data from the provisioning script and to generate based on the metadata for each of the plurality of commands defined by the provisioning script a command data frame in compliance with the serial communication protocol of the electronic device.

In a further embodiment, the metadata comprises information defining an expected procedure of the interaction between the provisioning apparatus and the electronic device, as defined by the plurality of commands of the provisioning script, thereby allowing the provisioning apparatus itself to communicate with the electronic device without needing to know the details of, or have a state machine implementing, the communication protocol itself.

In a further embodiment, the processing circuitry of the provisioning apparatus is configured based on the metadata to interpret a serial status data frame received from the electronic device.

In a further embodiment, the processing circuitry of the provisioning apparatus is configured based on the metadata to parse a serial data frame received from the electronic device and to determine based on the parsed serial data frame a number and/or size of further serial data frames to be transmitted by the electronic device during the portion of the provisioning session.

In a further embodiment, the processing circuitry of the provisioning apparatus is configured based on the metadata to determine the completion of one or more of the plurality of commands defined by the provisioning script and to determine a type of data to be returned to the provisioning security device in response to the completion of the one or more of the plurality of commands defined by the provisioning script.

In a further embodiment, the communication interface is configured to communicate with the provisioning security device via a wired connection.

According to a third aspect a provisioning system is provided for provisioning one or more electronic devices with provisioning data. The provisioning system comprises a provisioning security device according to the first aspect and a provisioning apparatus according to the second aspect.

Embodiments of the invention can be implemented in hardware and/or software.

### BRIEF DESCRIPTION OF THE DRAWINGS

Further embodiments of the invention will be described with respect to the following figures, wherein:
Fig. 1 shows a schematic diagram illustrating a provisioning system according to an embodiment, including a provisioning security device according to an embodiment and a provisioning apparatus according to an embodiment; and
Fig. 2 shows a signaling diagram illustrating the interaction of a provisioning security device according to an embodiment and a provisioning apparatus according to an embodiment for provisioning an electronic device.

In the figures, identical reference signs will be used for identical or at least functionally equivalent features.

### DETAILED DESCRIPTION OF EMBODIMENTS

In the following detailed description, reference is made to the accompanying drawings, which form part of the disclosure, and in which are shown, by way of illustration, specific aspects in which the present invention may be implemented. It is understood that other aspects may be utilized and structural or logical changes may be made without departing from the scope of the present invention. The following detailed description, therefore, is not to be taken in a limiting sense, as the scope of the present invention is defined by the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

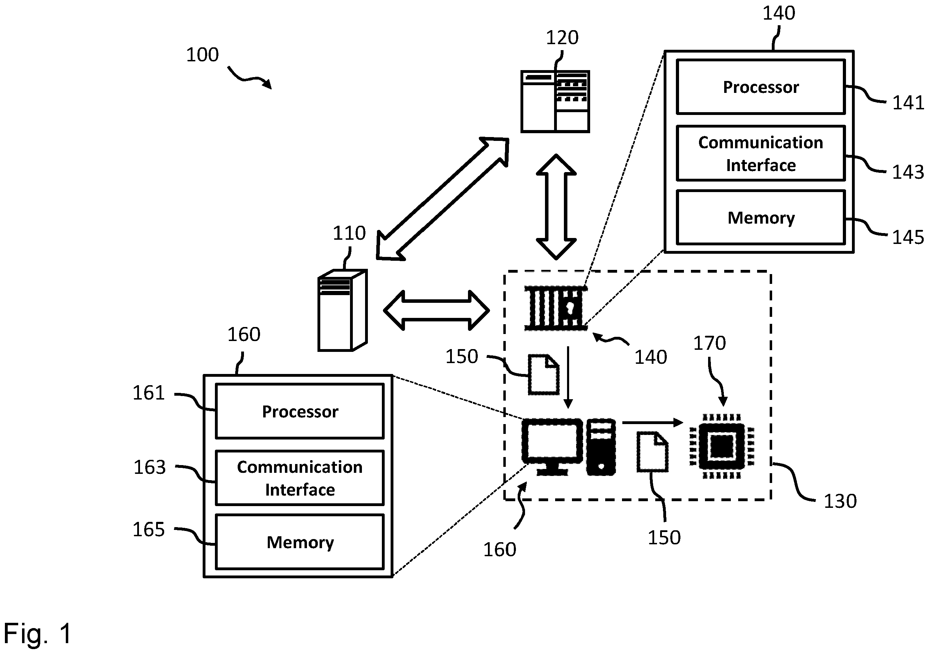

Figure 1 shows a schematic diagram of a provisioning system 100 according to an embodiment for provisioning or personalizing electronic devices 170, such as chips or microprocessors with provisioning data 150, e.g. a firmware including one or more personalized cryptographic keys. As will be described in more detail below, the provisioning system 100 comprises a security provisioning device 140 according to an embodiment and a provisioning apparatus 160 according to an embodiment. As illustrated in figure 1, the provisioning system 100 may comprise in addition to the security provisioning device 140 and the provisioning apparatus 160 a remote server 110 and a security server 120.

As illustrated in figure 1, the security provisioning device 140, the remote server 110 and the security server 120 may be configured to communicate with each other via a communication network, such as the Internet. Thus, the security provisioning device 140, the remote server 110 and the security server 120 may be at different locations and under the control of different parties. As illustrated in figure 1, the provisioning security device 140 and the provisioning apparatus 160 may be located within a production environment 130, such as a personalization factory. In an embodiment, the remote server 110 may be under the control or associated with an electronic equipment manufacturer, e.g. an OEM, wherein the electronic equipment manufacturer assembles electronic equipment, such as smart phones, tablet computers or other types of IoT or electronic consumer equipment, using the electronic devices 170 provisioned by the provisioning apparatus 160 with the provisioning data 150. In an embodiment, the provisioning data 150 may comprise firmware of the electronic equipment manufacturer associated with the remote server 110.

In an embodiment, the security provisioning device 140, the remote server 110 and the security server 120 are configured to securely communicate with each other using one or more cryptographic schemes, such as a public key infrastructure and/or a hybrid cryptographic scheme. In an embodiment, the security server 120 may be a trusted third party server 120 configured to operate a key management system used for the secure communication between the different components of the provisioning system 100, in particular between the remote OEM server 110 and the security provisioning device 140.

The security provisioning device 140 is configured to be coupled to the provisioning apparatus 160, for instance, by a wired or a wireless connection. In an embodiment, the provisioning apparatus 160 may be implemented as a personal computer and the security provisioning device 140 may be implemented as a Hardware Security Module (HSM) provided on a PC card inserted in the provisioning apparatus 160. The provisioning apparatus 160 may comprise an interface for interacting directly or indirectly via a provisioning equipment with the electronic device(s) 170 for provisioning the electronic device in a provisioning session with provisioning data 150 using a serial communication protocol of the electronic device 170, i.e. a communication protocol used by the electronic device (e.g. the Secure Firmware Installation (SFI) protocol implemented by ST microelectronics). For instance, the provisioning apparatus 160 may comprise a personalization tray for personalizing a batch of electronic devices 170 inserted therein. In the embodiment illustrated in figure 1 the security provisioning device 140 comprises a processor 141, a communication interface 143 and a non-transient electronic memory 145. Likewise, the provisioning apparatus 160 may comprise a processor 161, a communication interface 163 and a non-transient electronic memory 165.

As will be described in more detail below, the processing circuitry or processor 141 of the provisioning security device 140 is configured to generate a provisioning script for executing a portion of a current provisioning session, wherein the provisioning script defines a sequence of a plurality of commands of the serial communication protocol used by the electronic device 170 and comprises at least a portion of the provisioning data 150. In an embodiment, the provisioning script may comprise the sequence of the plurality of commands for provisioning the electronic device 170 with the portion of the provisioning data 150. In an embodiment, the plurality of commands defined by the provisioning script may comprise a plurality of sub-commands, wherein the sequence of the plurality of sub-commands defines a more general command or routine of the provisioning session for provisioning the electronic device 170. The communication interface 143 of the provisioning security device 140 is configured to transmit the provisioning script to the provisioning apparatus 160. In an embodiment, the plurality of commands defined by the provisioning script may comprise, for instance, one or more write commands for writing the portion of the provisioning data 150 included in the provisioning script into one or more portions of a memory of the electronic device 170.

The communication interface 163 of the provisioning apparatus 160, in turn, is configured to receive the provisioning script for executing a portion of the provisioning session from the provisioning security device 140. Moreover, the processing circuitry 161 of the provisioning apparatus 160 is configured to provision the electronic device 170 with the portion of the provisioning data 150 in accordance with the sequence of the plurality of commands of the serial communication protocol defined by the provisioning script.

As will be appreciated, the provisioning script allows moving at least a portion of a respective provisioning session from the often resource limited provisioning security device 140, which may be a HSM implemented on a PC card, to the computationally more powerful provisioning apparatus 160 and thus closer to the electronic device 170. Advantageously, this leads to a faster and more efficient provisioning of the electronic device 170.

In an embodiment, for provisioning the electronic device 170 the processing circuitry 161 of the provisioning apparatus 160 is configured to extract the portion of the provisioning data 150 from the provisioning script. In an embodiment, the processing circuitry 161 of the provisioning apparatus 160 may be configured to generate based on the provisioning script the sequence of the plurality of commands of the serial communication protocol. The communication interface 161, in turn, may be configured to transmit sequentially the plurality of commands of the serial communication protocol along with the payload, i.e. the portion of the provisioning data 150, to the electronic device 170 for execution by the electronic device 170.

In response to the sequential execution of the commands defined by the provisioning script the electronic device 170 may transmit one or more response messages to the provisioning apparatus 160. Thus, in an embodiment, the communication interface 163 of the provisioning apparatus 160 is configured to transmit to the provisioning security device 140 one or more of these response messages generated by the electronic device 170 in response to the execution of the sequence of the plurality of commands defined by the provisioning script. The communication interface 143 of the provisioning security device 140, in turn, is configured to receive from the provisioning apparatus 160 these one or more responses, such as one or more acknowledgement responses, generated by the electronic device 170 in response to the execution of the sequence of the plurality of commands defined by the provisioning script.

In an embodiment, the processing circuity 141 of the provisioning security device 140 is configured to generate based on or in response to the one or more responses generated by the electronic device 170 a further provisioning script for executing a further portion of the provisioning session. Like the previous provisioning script, the further provisioning script may define a further sequence of a plurality of commands of the serial communication protocol used by the electronic device 170 and may comprise a further portion of the provisioning data 150. The communication interface 143 of the provisioning security device 140 is configured to transmit the further provisioning script to the provisioning apparatus 160. In an embodiment, the processing circuity 141 of the provisioning security device 140 may continue generating further provisioning scripts, until the provisioning session has been completed, i.e. all the portions of the provisioning data 150 have been provided to the electronic device 170. After completing a provisioning session, the processing circuity 141 of the provisioning security device 140 may be configured to continue with provisioning the next electronic device 170 or the next batch of electronic devices 170 in the same way.

In an embodiment, the processing circuitry 141 of the provisioning security device 140 is configured to include metadata, i.e. control data into the provisioning script. The processing circuitry 161 of the provisioning apparatus 160 is configured to extract the metadata from the provisioning script and to generate based on the metadata for each of the plurality of commands defined by the provisioning script a command data frame in compliance with the serial communication protocol of the electronic device 170. In other words, in an embodiment the processing circuitry 161 of the provisioning apparatus 160 is configured to parse the serial bytes of the provisioning script provided by the provisioning security device 140 and frame them in such a way that it satisfies the serial communication protocol implemented between the provisioning apparatus 160 and the electronic device 170. In an embodiment, the metadata includes information defining the expected procedure of the interaction between the provisioning apparatus 160 and the electronic device 170, as defined by the plurality of commands defined by the provisioning script. In other words, in an embodiment, the metadata includes information describing how the command sequence defined by the provisioning script is expected to behave, which allows the provisioning apparatus 160 itself to communicate with the electronic device 180 without needing to know the details of, or have a state machine implementing, the communication protocol itself.

In a further embodiment, the processing circuitry 161 of the provisioning apparatus 160 is configured based on the metadata to interpret a serial status data frame, such as a negative acknowledgment message frame, received from the electronic device 170.

In a further embodiment, the processing circuitry 161 of the provisioning apparatus 160 is configured based on the metadata to parse a serial data frame received from the electronic device 170 and to determine based on the parsed serial data frame a number and/or size of further serial data frames to be transmitted by the electronic device 170 during the remaining part of the portion of the current provisioning session. In other words, in an embodiment, the processing circuitry 161 of the provisioning apparatus 160 is configured to parse protocol-specific serial information from the electronic device 170 for estimating how many more bytes the electronic device 170 will send before terminating the latest message exchange in the current provisioning session.

In a further embodiment, the processing circuitry 161 of the provisioning apparatus 160 is configured based on the metadata to determine the completion of one or more of the plurality of commands defined by the provisioning script and to determine a type of data to be returned to the provisioning security device 160 in response to the completion of the one or more of the plurality of commands defined by the provisioning script. In other words, in an embodiment, the processing circuitry 161 of the provisioning apparatus 160 is configured to know when any particular command is complete and what data to return to the provisioning security device 140.

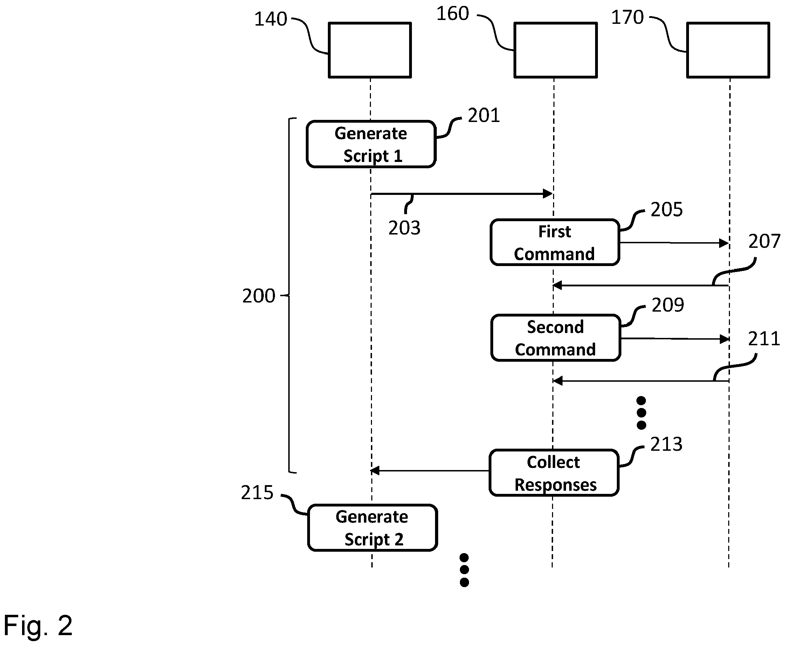

Figure 2 shows a signaling diagram illustrating the interaction of the security provisioning device 140 according to an embodiment with the provisioning apparatus 160 according to an embodiment for provisioning the electronic device(s) 170 with provisioning data 150. In figure 2 the following steps are illustrated, some of which already have been described in the context of figure 1.

In step 201 of figure 2, the processing circuitry 141 of the security provisioning device 140 generates the provisioning script defining the sequence of commands for provisioning the electronic device 170.

In step 203 of figure 2, the communication interface 143 of the security provisioning device 140 transmits the provisioning script together with a portion of the provisioning data 150 and metadata to the provisioning apparatus 160.

In step 205 of figure 2, the processing circuitry 161 of the provisioning apparatus 160 generates on the basis of the provisioning script received in step 203 a first data frame including the first command of the sequence of commands defined by the provisioning script. As already described above. In an embodiment, the plurality of commands defined by the provisioning script may comprise a plurality of sub-commands, wherein the sequence of the plurality of sub-commands defines a more general command or routine of the provisioning session for provisioning the electronic device 170. The communication interface 163 of the provisioning apparatus 160 transmits the first data frame including the first command and possibly a portion of the provisioning data 150 as payload to the electronic device 170.

In step 207 of figure 2, having executed the command defined by the first data frame the electronic device 170 transmits a first response message to the provisioning apparatus 160.

Depending on the number of commands defined by the provisioning script steps 205 and 207 are repeated as often as necessary, as illustrated by steps 209 and 211 of figure 2.

Once all commands of the provisioning sequence have been executed by the electronic device 180, the processing circuitry 161 of the provisioning apparatus 160 collects all response messages from the electronic device 170 and provides these to the security provisioning device 140 (step 213 of figure 2). This completes a first portion 200 of the provisioning session for provisioning the electronic device 170.

In step 215 the processing circuitry 141 of the security provisioning device 140 generates a further provisioning script, which may depend on the response messages obtained in step 213, defining a further sequence of commands for further provisioning the electronic device 170. This is repeated, until the electronic device 170 is fully provisioned.

While a particular feature or aspect of the disclosure may have been disclosed with respect to only one of several implementations or embodiments, such feature or aspect may be combined with one or more other features or aspects of the other implementations or embodiments as may be desired and advantageous for any given or particular application.

Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention. It is therefore to be understood that within the scope of the appended claims and their equivalents, the invention may be practiced otherwise than as specifically described herein.

## Claims

1. A provisioning security device (140) configured to be coupled to a provisioning apparatus (160), the provisioning apparatus (160) being electrically connectable with at least one electronic device (170) for provisioning the electronic device (170) in a provisioning session with provisioning data (150) using a serial communication protocol of the electronic device (170), wherein the provisioning security device (140) comprises:
a processing circuitry (141) configured to generate a provisioning script for executing a portion of the provisioning session, wherein the provisioning script defines a sequence of a plurality of commands of the serial communication protocol and comprises a portion of the provisioning data (150); and
a communication interface (143) configured to transmit the provisioning script to the provisioning apparatus (160).

2. The provisioning security device (140) of claim 1, wherein the communication interface (143) is further configured to receive from the provisioning apparatus (160) one or more responses generated by the electronic device (170) in response to the execution of the sequence of the plurality of commands defined by the provisioning script.

3. The provisioning security device (140) of claim 2, wherein the processing circuity (141) is configured to generate based on the one or more responses generated by the electronic device (170) a further provisioning script for executing a further portion of the provisioning session, wherein the further provisioning script defines a further sequence of a plurality of commands of the serial communication protocol and comprises a further portion of the provisioning data (150), wherein the communication interface (143) is configured to transmit the further provisioning script to the provisioning apparatus (160).

4. The provisioning security device (140) of any one of the preceding claims, wherein the plurality of commands comprise one or more write commands for writing the portion of the provisioning data (150) into one or more portions of a memory of the electronic device (170).

5. The provisioning security device (140) of any one of the preceding claims, wherein the processing circuitry (141) is further configured to include metadata into the provisioning script, wherein the metadata comprises data for enabling the provisioning apparatus (160) to generate for each of the plurality of commands defined by the provisioning script a command data frame in compliance with the serial communication protocol of the electronic device (170).

6. The provisioning security device (140) of claim 5, wherein the metadata comprises information defining an expected procedure of the interaction between the provisioning apparatus (160) and the electronic device (170), as defined by the plurality of commands of the provisioning script.

7. The provisioning security device (140) of claim 5 or 6, wherein the metadata further comprises data for enabling the provisioning apparatus (160) to interpret a serial status data frame received by the provisioning apparatus (160) from the electronic device (170).

8. The provisioning security device (140) of any one of claims 5, 6 or 7, wherein the metadata further comprises data for enabling the provisioning apparatus (160) to parse a serial data frame received by the provisioning apparatus (160) from the electronic device (170) and to determine based on the parsed serial data frame a number and/or size of further serial data frames to be transmitted by the electronic device (170) to the provisioning apparatus (160) during the portion of the provisioning session.

9. The provisioning security device (140) of any one of claims 5 to 8, wherein the metadata further comprises data enabling the provisioning apparatus (160) to determine the completion of one or more of the plurality of commands defined by the provisioning script and to determine a type of data to be returned to the provisioning security device (140) in response to the completion of the one or more of the plurality of commands defined by the provisioning script.

10. The provisioning security device (140) of any one of the preceding claims, wherein the communication interface (143) is configured to communicate with the provisioning apparatus (160) via a wired connection.

11. A provisioning apparatus (160) configured to be electrically connected with at least one electronic device (170) for provisioning the electronic device (170) in a provisioning session with provisioning data (150) using a serial communication protocol of the electronic device (170), wherein the provisioning apparatus (160) comprises:
a communication interface (163) configured to receive a provisioning script for executing a portion of the provisioning session from a provisioning security device (140), wherein the provisioning script defines a sequence of a plurality of commands of the serial communication protocol and comprises a portion of the provisioning data (150); and
a processing circuitry (161) configured to provision the electronic device (170) with the portion of the provisioning data (150) in accordance with the sequence of the plurality of commands of the serial communication protocol.

12. The provisioning apparatus (160) of claim 11, wherein for provisioning the electronic device (170) the processing circuitry (161) is configured to extract the portion of the provisioning data (150) from the provisioning script.

13. The provisioning apparatus (160) of claim 11 or 12, wherein for provisioning the electronic device (170) the processing circuitry (161) is configured to generate based on the provisioning script the sequence of the plurality of commands of the serial communication protocol and the communication interface (163) is configured to transmit sequentially the plurality of commands of the serial communication protocol to the electronic device (170) for execution by the electronic device (170).

14. The provisioning apparatus (160) of any one of claims 11 to 13, wherein the communication interface (163) is further configured to transmit to the provisioning security device (140) one or more responses generated by the electronic device (170) in response to the execution of the sequence of the plurality of commands defined by the provisioning script.

15. The provisioning apparatus (160) of any one of claims 11 to 14, wherein the plurality of commands comprise one or more write commands for writing the portion of the provisioning data (150) into one or more portions of a memory of the electronic device (170).

16. The provisioning apparatus (160) of any one of claims 11 to 15, wherein the processing circuitry (161) is further configured to extract metadata from the provisioning script and to generate based on the metadata for each of the plurality of commands defined by the provisioning script a command data frame in compliance with the serial communication protocol of the electronic device (170).

17. The provisioning apparatus (160) of claim 16, wherein the processing circuitry (161) is further configured based on the metadata to determine an expected procedure of the interaction between the provisioning apparatus (160) and the electronic device (170), as defined by the plurality of commands of the provisioning script.

18. The provisioning apparatus (160) of claim 16 or 17, wherein the processing circuitry (161) is further configured based on the metadata to interpret a serial status data frame received from the electronic device (170).

19. The provisioning apparatus (160) of any one of claims 16 to 18, wherein the processing circuitry (161) is further configured based on the metadata to parse a serial data frame received from the electronic device (170) and to determine based on the parsed serial data frame a number and/or size of further serial data frames to be transmitted by the electronic device (170) during the portion of the provisioning session.

20. The provisioning apparatus (160) of any one of claims 16 to 19, wherein the processing circuitry (161) is further configured based on the metadata to determine the completion of one or more of the plurality of commands defined by the provisioning script and to determine a type of data to be returned to the provisioning security device (140) in response to the completion of the one or more of the plurality of commands defined by the provisioning script.

21. The provisioning apparatus (160) of any one of claims 11 to 20, wherein the communication interface (163) is configured to communicate with the provisioning security device (140) via a wired connection.

22. A provisioning system for provisioning one or more electronic devices (170) with provisioning data (150), wherein the provisioning system comprises a provisioning security device (140) according to any one of claims 1 to 10 and a provisioning apparatus (160) according to any one of claims 10 to 21.
